# EUROPÄISCHE PATENTSCHRIFT

(11) **EP 3 686 102 B1**
(45) Veröffentlichungstag und Bekanntmachung des Hinweises auf die Patenterteilung: **27.10.2021**
(21) Anmeldenummer: 19153759.6
(22) Anmeldetag: 25.01.2019
(51) Int. Cl.: B62M 6/55, B62K 19/34, B62M 3/00

(54) **PEDELEC-TRETLAGERANTRIEBSEINHEIT**
PEDELEC BOTTOM BRACKET DRIVE UNIT
UNITÉ D'ENTRAÎNEMENT DE PÉDALIER DU VÉLO À ASSISTANCE ÉLECTRIQUE

(43) Veröffentlichungstag der Anmeldung: 29.07.2020
(73) Patentinhaber: Amprio GmbH, 41460 Neuss (DE)
(72) Erfinder: GREVEN, Dietmar, 41460 Neuss (DE); OTZEN, Kai, 41460 Neuss (DE); HEMSING, Axel, 41460 Neuss (DE); THIELE, Peter, 41460 Neuss (DE)
(74) Vertreter: terpatent Patentanwälte ter Smitten Eberlein-Van Hoof Rütten Daubert

(56) Entgegenhaltungen:
- DE-A1-102016 112 778
- DE-A1-102017 201 617
- DE-U1-202014 101 083
- US-A1- 2013 032 425
- US-A1- 2015 007 689

## Beschreibung

Die Erfindung bezieht sich auf eine Pedelec-Tretlagerantriebseinheit, die an einen Pedelecrahmen montierbar ist.

Die typische Pedelec-Tretlagerantriebseinheit weist unter anderem eine in Querrichtung, also quer zur Fahrtrichtung, orientierte Tretlagerwelle auf, an deren Längsenden jeweils eine Tretkurbel mit einem Tretpedal befestigt ist. Durch den Pedelec-Fahrer werden über die Pedale, die Tretkurbeln und die Tretlagerwelle sehr hohe statische und insbesondere dynamische Kräfte auf die Tretlagerantriebseinheit übertragen. Die Tretlagerantriebseinheit muss also über eine starke und robuste Verbindung an dem Pedelecrahmen montiert und fixiert sein.

Der Hersteller der Pedelec-Tretlagerantriebseinheit ist typischerweise nicht identisch mit dem Hersteller des Pedelecrahmens, so dass die rahmenseitige Antriebsaufnahme Ungenauigkeiten und Toleranzen aufweisen kann, die eine spaltfreie Montage der Tretlagerantriebseinheit an bzw. in der Antriebsaufnahme erschweren oder unmöglich machen. Für eine stabile Montage der Tretlagerantriebseinheit an dem Pedelecrahmen müssen also Toleranzausgleichs-Mittel vorgesehen werden, die dauerhaft eine verschleißfreie Übertragung hoher dynamischer und statischer Kräfte sicherstellen. DE 10 2016 112778 A1 offenbart die Merkmale des Oberbegriffs des Anspruchs 1.

Aus DE 10 2016 112 778 A1, DE 10 2017 201 617 A1 und EP 3 239 029 A1 ist jeweils eine Tretlagerantriebseinheit bekannt, die über hülsenartige Toleranzausgleichs-Schubkörper den Montagespalt zwischen einem antriebsgehäuseseitigen Fixierpunkt und einer Pedelecrahmen-seitigen Antriebsaufnahme überbrücken. Bei einem relativ großen zu überbrückenden Spalt zwischen der Antriebsaufnahme und der Tretlagerantriebseinheit können die hohen dynamischen und statischen Kräfte an den Toleranzausgleichs-Schubkörpern zu Lockerungen und schließlich zum Bruch führen.

Aufgabe der Erfindung ist es demgegenüber, eine Tretlagerantriebseinheit mit einer Toleranzausglelchs-Mimik zu schaffen, die dauerhaft hohe dynamische Kräfte aushält.

Diese Aufgabe wird erfindungsgemäß mit einer Pedelec-Tretlagerantriebseinheit mit den Merkmalen des Anspruchs 1 gelöst.

Die erfindungsgemäße Pedelec-Tretlagerantriebseinheit weist ein steifes Antriebsgehäuse auf, an dem eine im Wesentlichen in einer Vertikalebene stehende Toleranzausgleichs-Blechfeder an mindestens einem antriebsgehäuseseitigen Fixierpunkt fixiert ist. Die Blechfeder steht jedoch nicht notwendigerweise vollflächig in einer einzigen Vertikalebene. Die Blechfeder kann in Draufsicht von oben betrachtet auch beispielsweise wellenartig verlaufen, so dass sie an jedem Punkt ungefähr in einer Vertikalebene steht, jedoch können diese Vertikalebenen sich schneiden bzw. parallel zueinander stehen. Auch eine Verkippung der betreffenden Vertikalebene zu der Erd-Vertikalen von maximal 5-10° ist noch eine Vertikalebene im Sinne der Patentansprüche. Die Toleranzausgleichs-Blechfeder steht besonders bevorzugt in einer sich ungefähr in Längsrichtung des Pedelec-Rahmens erstreckenden Vertikalebene.

Die Toleranzausgleichs-Blechfeder weist mindestens einen Montagepunkt zur Befestigung an einer Pedelecrahmen-seitigen flanschartigen Antriebsaufnahme auf. Der Montagepunkt ist mit seiner Querachse versetzt zu dem nächsten gehäuseseitigen Fixierpunkt angeordnet. Unter einer Querachse ist jede Achse zu verstehen, die ungefähr senkrecht zur Längserstreckung bzw. zur Längsrichtung des Pedelecrahmens orientiert ist. Der oder die Montagepunkte sind also nicht koaxial zu dem oder den Fixierpunkten angeordnet, sondern der oder die Montagepunkte sind stets in Längsrichtung und/oder vertikal beabstandet zu dem oder den Fixierpunkten angeordnet.

Zwischen einem Fixierpunkt und dem benachbarten Montagepunkt ist also ein sich ungefähr in Längsrichtung erstreckender Abschnitt der Toleranzausgleichs-Blechfeder vorgesehen, der über seine elastische Biegsamkeit den Montagespalt zwischen der Antriebsaufnahme und der Tretlagerantriebseinheit in diesem Bereich ausgleicht. Da die Blechfeder im Wesentlichen mit ihrer Grundebene vertikal orientiert ist, kann sie selbst bei einer relativ geringen vertikalen Erstreckung von beispielsweise 10 mm und einer relativ geringen Blechdicke im niedrigen einstelligen Millimeterbereich sehr hohe vertikale Kräfte übertragen, die für eine Pedelec-Tretlagerantrlebseinheit typisch sind. Da es sich bei der Blechfeder um ein Federelement handelt, kann die Blechfeder insbesondere hohe dynamische Kräfte-Peaks abfedern, sodass die Gefahr der Lockerung oder eines Bruchs der beteiligten Verbindungen erheblich reduziert ist.

Die Blechfeder ist auf geeignete Weise fixiert an dem gehäuseseitigen Fixierpunkt, wobei die Fixierung stoffschlüssig, kraftschlüssig und/oder formschlüssig erfolgen kann. Besonders bevorzugt erfolgt die Fixierung der Blechfeder an dem Fixierpunkt über eine Schraubverbindung.

An dem Montagepunkt ist bevorzugt eine Öffnung in der Blechfeder vorgesehen, so dass die Blechfeder mit einem Gewinde-Bolzen, einer Gewinde-Schraube oder einem ähnlichen Befestigungselement an der Antriebsaufnahme montiert und fixiert werden kann.

Vorzugsweise ist vorgesehen, dass der Versatz zwischen der Querachse des gehäuseseitigen Blechfeder-Fixierpunktes und der Querachse des nächsten benachbarten Montagepunktes der Blechfeder mindestens 10,0 mm beträgt, besonders bevorzugt mindestens 15,0 mm beträgt. Je größer der Versatz ist, desto mehr Toleranzausgleich kann die Blechfeder leisten. Allerdings nimmt mit zunehmendem Versatz bei vertikaler Krafteinleitung auch die Torsion der Blechfeder zu, sodass der Versatz der Querachsen grundsätzlich so klein wie möglich dimensioniert sein sollte.

Die Längserstreckung der Blechfeder kann horizontal, vertikal oder auch in einem Winkel dazwischen orientiert sein. Die Blechfeder muss jedoch nicht notwendigerweise als geradliniger Blechstreifen ausgebildet sein, sondern kann beispielsweise bogenförmig, angewinkelt, dreieckig, rechteckig oder auf andere Weise vieleckig ausgebildet sein.

Gemäß einer bevorzugten Ausgestaltung ist vorgesehen, dass die Summe aller Fixierpunkte und aller Montagepunkte einer einzigen Toleranzausgleichs-Blechfeder zusammen mindestens Drei beträgt, wobei stets mindestens ein Fixierpunkt und mindestens ein Montagepunkt vorgesehen ist. Es können jedoch auch mehrere Toleranzausgleichs-Blechfedern an der Tretlagerantriebseinheit vorgesehen sein.

Vorzugsweise ist vorgesehen, dass das Antriebsgehäuse einen separaten steifen Anschlagflansch aufweist, der in Querrichtung unmittelbar und spaltfrei an einem steifen Anschlagflansch der Antriebsaufnahme fixierbar ist. Die Flanschebene des Antriebsgehäuse-Anschlagflansches bzw. die Grenzebene zwischen dem Antriebsgehäuse-Anschlagflansch und dem Antriebsaufnahme-Anschlagflansch ist ungefähr in einer vertikalen Längsebene angeordnet, die in Querrichtung um mindestens 10 mm versetzt zu der vertikalen Grundebene der Toleranzausgleichs-Blechfeder angeordnet ist. Die beiden spaltfrei miteinander verbundenen Anschlagflansche bilden also in gewisser Weise ein Festlager, wohingegen die in Querrichtung beabstandete Toleranzausgleichs-Blechfeder Teil eines Loslagers ist, durch das der Montagespalt überbrückt wird, der sich aus Fertigungstoleranzen der Antriebsaufnahme und des Antriebsgehäuses, sowie aus temperaturbedingten Ausdehnungs-Unterschieden ergibt.

Vorzugsweise weist die Toleranzausgleichs-Blechfeder zwischen einem Fixierpunkt und dem benachbarten Montagepunkt eine Strecksicke auf, die in gewissen Grenzen eine Streckung des Blechfeder-Abschnitts zwischen dem Fixierpunkt und dem benachbarten Montagepunkt erlaubt. Durch die Strecksicke wird sichergestellt, dass nach der Montage der Tretlagerantriebseinhelt in der Antriebsaufnahme keine nennenswerten statischen Streckkräfte der Blechfeder auftreten können, die beispielsweise bei relativ großen Spalten oder bei temperaturbedingten Längenänderungen der Blechfeder auftreten können.

Vorzugsweise ist vorgesehen, dass mindestens zwei separate Toleranzausgleichs-Blechfedern vorgesehen sind. So kann beispielsweise eine erste Toleranzausgleichs-Blechfeder im Wesentlichen in Pedelec-Längsrichtung orientiert vorgesehen sein, die die vertikalen Kräfte überträgt. Eine zweite Toleranzausgleichs-Blechfeder kann höhenmäßig versetzt zu der ersten Blechfeder angeordnet sein, um die durch die vertikalen Kräfte generierten Drehmomente um die Pedelec-Längsachse herum abzustützen. Hierdurch wird die Torsion der ersten Blechfeder auf ein Minimum reduziert.

Gemäß einer bevorzugten Ausgestaltung ist ein Abtriebs-Kettenblatt vorgesehen, über das das Gesamt-Abtriebsmoment der Tretlagerantriebseinheit auf eine Antriebskette, einen Antriebsriemen oder eine Kardanwelle übertragen wird. Die Längsebene des Antriebsgehäuse-Anschlagflansches ist näher zu dem Abtriebs-Kettenblatt angeordnet als die Vertikalebene der Blechfeder. Auf diese Weise wird sichergestellt, dass über die Anschlagflansch-Verbindung der größte Teil der über das Abtriebs-Kettenblatt eingeleiteten Kräfte von der Tretlagerantriebseinheit auf die Antriebsaufnahme übertragen wird.

Im Folgenden wird ein Ausführungsbeispiel der Erfindung anhand der Zeichnungen näher erläutert. Es zeigen:
Figur 1 eine perspektivische Ansicht einer Pedelec-Tretlagerantriebseinheit und einer Antriebsaufnahme eines Pedelec Rahmens,
Figur 2 einen horizontalen Längsschnitt der an der Antriebsaufnahme montierten Pedelec-Tretlagerantriebseinheit der Figur 1, und
Figur 3 einen vertikalen Querschnitt der an der Antriebsaufnahme montierten Pedelec-Tretlagerantriebseinheit in der Figur 1.

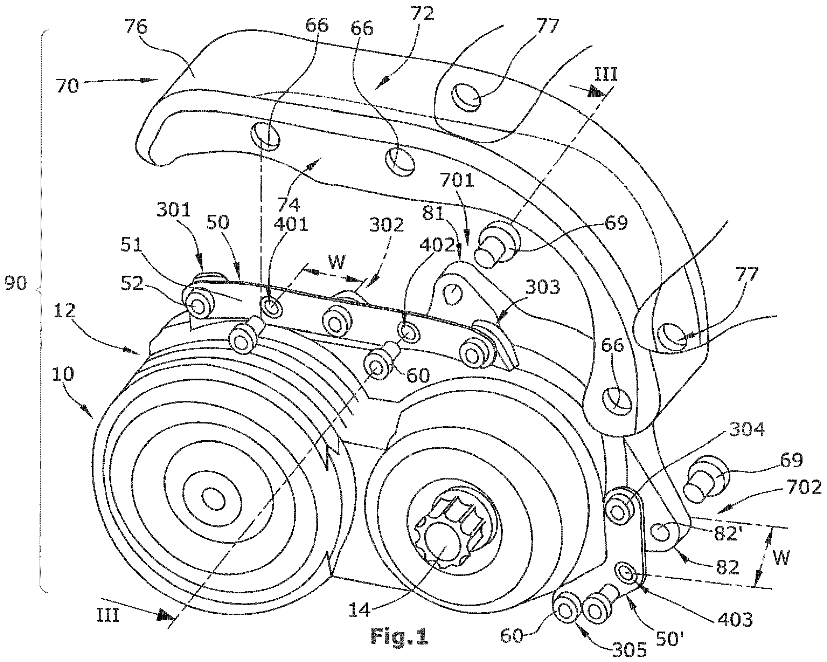

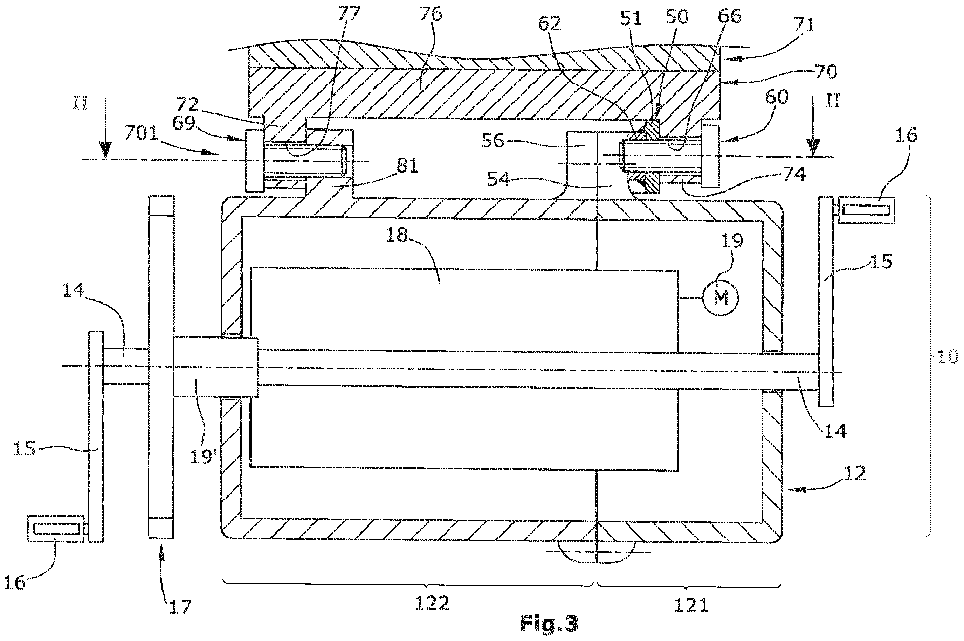

In der Figur 1 ist eine Pedelec-Tretlagerantriebseinheit 10 dargestellt, die für die Montage in einer Pedelecrahmen-seitigen Antriebsaufnahme 70 bereitsteht. Die Tretlagerantriebseinheit 10 weist ein starres Antriebsgehäuses 12 auf, in dem ein elektrischer Antriebsmotor 19 und ein Summiergetriebe 18 angeordnet sind, wie in der Figur 3 dargestellt. Ferner weist die Tretlagerantriebseinheit 10 eine in Querrichtung orientierte Tretlagerwelle 14 auf, die drehbar in der Tretiagerantriebseinheit 10 gelagert ist. An den beiden Längsenden der Tretlagerwelle 14 ist jeweils eine in einer vertikalen Längsebene stehende bzw rotierende Tretkurbel 15 einschließlich eines Tretpedals 16 vorgesehen. Ferner weist die Tretlagerantriebseinheit 10 eine Abtriebs-Hohlwelle 19' auf, die drehfest mit einem Abtriebs-Kettenblatt 17 verbunden ist, über das das Abtriebs-Drehmoment über eine Kette auf ein Pedelec-Hinterrad übertragen werden kann.

In der Figur 1 ist perspektivisch eine Gesamtanordnung 90 bestehend aus der Tretlagerantriebseinheit 10 und der Pedelecrahmen-seitigen steifen Antriebsaufnahme 70 vor der Montage der Tretlagerantriebseinheit 10 in die Antriebsaufnahme 70 dargestellt. Die Antriebsaufnahme 70 weist ein im Querschnitt ungefähr nach unten offenes U-förmiges Profil auf, wie insbesondere in der Figur 3 erkennbar ist. Die Antriebsaufnahme 70 weist einen sich in Querrichtung erstreckenden Antriebsaufnahmen-Grundkörper 76, einen ein Festlager bildenden Anschlagflansch 72 und einen Loslagerflansch 74 auf. Der Antriebsaufnahmen-Grundkörper 76 ist mit einem Pedelec-Rahmenteil 71 des Pedelecrahmens fest verbunden, beispielsweise verschweißt.

Von dem Antriebsaufnahme-Grundkörper 76 wird der in einer Längs-Vertikalebene stehende Aufnahme-Anschlagflansch 72, der ein Festlager bildet, und der hierzu parallele und in Querrichtung beabstandete sowie ebenfalls in einer Längs-Vertlkalebene stehende Loslagerflansch 74 gehalten. Die beiden Antriebsaufnahme-Flansche 72,74 weisen jeweils mehrere in Querrichtung durchgehende Befestigungsöffnungen 66,77 auf, durch die mit Hilfe von Befestigungsschrauben 69,60 die Tretlagerantriebseinheit 10 in der bzw. an der Antriebsaufnahme 70 fixiert werden kann bzw. ist.

Hierzu ist an dem Antriebsgehäuse 12 der Tretlagerantriebseinheit 10 eine ungefähr in einer Längs-Vertikalebene stehende erste Toleranzausgleichs-Blechfeder 50 sowie eine ebenfalls ungefähr in einer vertikalen Längsebene stehende zweite Toleranzausgleichs-Blechfeder 50' vorgesehen bzw. fixiert. Die erste Toleranzausgleichs-Blechfeder 50 ist als geradliniger Längsstreifen ausgebildet und ist an drei gehäuseseitigen Fixierpunkten 301,302,303 an dem Antriebsgehäuse 12 fixiert.

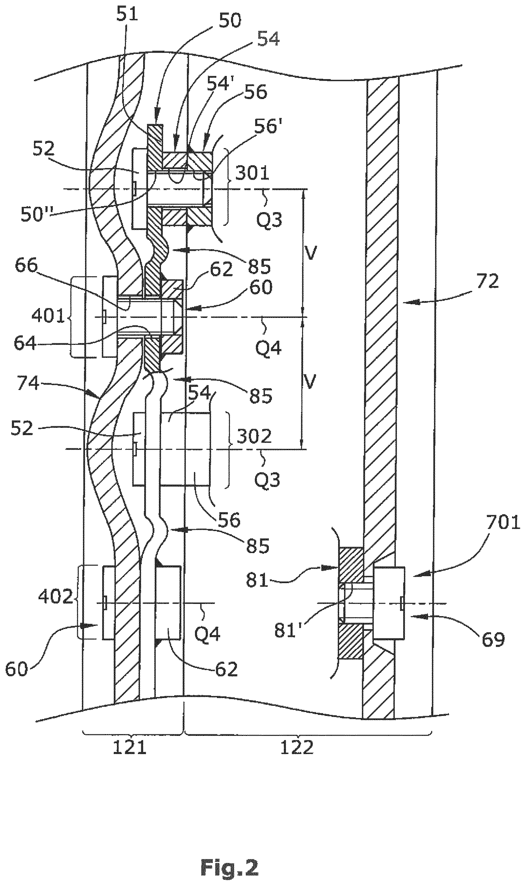

Das Antriebsgehäuse 12 besteht aus zwei Gehäuseschalen 121,122, wie in den Figuren 2 und 3 dargestellt ist. Die beiden Gehäuseschalen 121,122 weisen jeweils miteinander korrespondierende Flanschelemente 54,56 auf, wobei das distale Fixierpunkt-Flanschelement 54 jeweils eine Stecköffnung 54' und das proximale Flanschelement 56 jeweils ein Innengewinde 56' aufweist. An dem jeweiligen distalen Fixierpunkt-Flanschelement 54 ist durch eine Gewindeschraube 52, die durch eine Stecköffnung 50" des Blechfeder-Federkörpers 51 gesteckt und in das proximale Flanschelement 56 eingeschraubt ist, die Toleranzausgleichs-Blechfeder 50 angeschlagen. Auf diese Weise ist zum einen die erste Toleranzausgleichs-Blechfeder 50 an drei Fixierpunkten 301,302,303 an dem Antriebsgehäuse 12 fixiert und werden zum anderen die beiden Gehäuseschalen 121,122 des Antriebsgehäuses 12 an denselben drei Fixierpunkten 301,302,303 miteinander verschraubt.

In Längsrichtung betrachtet zwischen den drei Fixierpunkten 301,302,303 ist jeweils ungefähr mittig dazwischen ein Montagepunkt 401,402 vorgesehen, über den die Tretlagerantriebseinheit 10 an dem Loslagerflansch 74 der Antriebsaufnahme 70 fixiert werden kann bzw. ist. Wie in der Figur 2 dargestellt, weist der Loslagerflansch 74 hierzu jeweils eine Stecköffnung 66 auf, durch die von außen eine Befestigungsschraube 60 hindurch gesteckt ist, die durch eine Stecköffnung 64 des Blechfeder-Körpers 51 in eine proximal auf den Blechfeder-Körper 51 aufgeschweißte Gewindemutter 62 eingeschraubt ist. Zwischen einem Fixierpunkt 301,302,303 und einem Montagepunkt 401,402 weist die in Draufsicht leicht wellenartig verlaufende Blechfeder 50 jeweils eine Strecksicke 85 auf, die eine federnde Verlängerung der Längserstreckung der Blechfeder 50 sowohl während der Montage als auch im Betrieb in gewissen Grenzen zulässt.

Zwischen der Querachse Q3 eines gehäuseseitigen Blechfeder-Fixierpunktes 301,302,303 und der Querachse Q4 des jeweils nächsten benachbarten Montagepunkts 401,402 beträgt der Versatz V jeweils ungefähr 25 mm.

Das Antriebsgehäuse 12 weist zwei Anschlagflansche 81,82 auf, die in Querrichtung betrachtet unmittelbar an dem Aufnahme-Anschlagflansch 72 anliegen und an diesem fixiert sind wie in den Figuren 2 und 3 dargestellt. Hierzu weisen die beiden Antriebsgehäuse-Anschlagflansche 81,82 jeweils eine in Querrichtung durchgehende Gewindebohrung 81',82' auf, in die von außen und durch die jeweiligen Stecköffnungen 77 des Aufnahme-Anschlagflansches 72 hindurchgesteckte Gewindeschrauben 69 eingeschraubt sind. Auf diese Weise werden zwei Festlager-Befestigungspunkte 701,702 gebildet, wobei sich der Begriff "Festlager" vorliegend auf die Beweglichkeit in Querrichtung bezieht. Der seitliche Versatz zwischen der Festlager-Flanschebene und der Toleranzausgleichs-Blechfeder 50 beträgt ungefähr 50 mm.

Die zweite Toleranzausgleichs-Blechfeder 50' ist analog zu der ersten Toleranzausgleichs-Blechfeder 50 an dem Antriebsgehäuse 12 einerseits und dem Loslagerflansch 74 andererseits fixiert, wobei die zweite Toleranzausgleichs-Blechfeder 50' ungefähr in derselben vertikalen Längsebene angeordnet ist, wie die erste Toleranzausgleichs-Blechfeder 50. Die erste Toleranzausgleichs-Blechfeder ist an der Oberseite des Antriebsgehäuses 12 vorgesehen, während die zweite Toleranzausgleichs-Blechfeder 50' an dem vorderen Längsende des Antriebsgehäuses 12 vorgesehen ist. Die zweite Toleranzausgleichs-Blechfeder 50' definiert zwei weitere Blechfeder-Fixierpunkte 304,305 und dazwischen einen einzigen Montagepunkt 403, die jeweils analog zu denen der ersten Blechfeder 50 ausgebildet sind.

Durch die In gewissen Grenzen in Querrichtung federnde Ausbildung der Toleranzausgleichs-Blechfeder 50 können die in der Praxis unvermeidlichen und in der Größe variierenden Toleranzspalte zwischen der distalen Seite der Toleranzausgleichs-Blechfeder 50 und der proximalen Seite des Loslagerflansches 74 spannungsfrei ausgeglichen werden, wodurch die Montage der Tretlagerantriebseinheit 10 in der Antriebsaufnahme 70 vereinfacht ist.

## Patentansprüche

1. Pedelec- Tretlagerantriebseinheit (10) mit einem steifen Antriebsgehäuse **dadurch gekennzeichnet, dass** an dem Antriebsgehäuse eine im Wesentlichen in einer Vertikalebene stehende Toleranzausgleichs-Blechfeder (50) an einem gehäuseseitigen Fixierpunkt (301-305) fixiert ist, wobei die Toleranzausgleichs-Blechfeder (50) einen Montagepunkt (401 - 403) zur Befestigung an einer Pedelecrahmen-seitigen Antriebsaufnahme (70) aufweist, wobei bezogen auf ihre Querachsen (Q3,Q4) der Montagepunkt (401-403) der Toleranzausgleichs-Blechfeder (50) versetzt zu dem nächsten gehäuseseitigen Fixierpunkt (301-305) angeordnet ist.

2. Pedelec-Tretlagerantriebseinheit (10) nach Anspruch 1, wobei der Versatz (V) zwischen der Querachse (Q3) des gehäuseseitigen Blechfeder-Fixierpunktes (301) und der Querachse (Q4) des nächsten benachbarten Montagepunktes (401) mindestens 10,0 mm beträgt, besonders bevorzugt mindestens 15,0 mm beträgt.

3. Pedelec-Tretlagerantriebseinheit (10) nach einem der vorangegangenen Ansprüche, wobei die Summe aller Fixierpunkte (301-303) und Montagepunkte (401-402) einer Toleranzausgleichs-Blechfeder (50) zusammen mindestens Drei beträgt.

4. Pedelec-Tretlagerantriebseinheit (10) nach einem der vorangegangenen Ansprüche, wobei die Toleranzausgleichs-Blechfeder (50) zwischen einem Fixierpunkt (301-305) und dem benachbarten Montagepunkt (401-403) eine Strecksicke (85) aufweist.

5. Pedelec-Tretlagerantriebseinheit (10) nach einem der vorangegangenen Ansprüche, wobei das Antriebsgehäuse (12) einen Anschlagflansch (81,82) aufweist, der in Querrichtung unmittelbar an einem Aufnahme-Anschlagflansch (72) fixierbar und dessen Flanschebene in einer vertikalen Längsebene angeordnet ist, die um mindestens 10 mm in Querrichtung versetzt zu der Toleranzausgleichs-Blechfeder (50) angeordnet ist.

6. Pedelec-Tretlagerantriebseinheit (10) nach einem der vorangegangenen Ansprüche, wobei mindestens zwei separate Toleranzausgleichs-Blechfedern (50,50') vorgesehen sind.

7. Pedelec-Tretlagerantriebseinheit (10) nach einem der vorangegangenen Ansprüche, wobei ein Abtriebs-Kettenblatt (17) vorgesehen ist, wobei die Längsebene des Antriebsgehäuse-Anschlagflansches (81,82) dem Abtriebs-Kettenblatt (17) näher ist als die Längs-Vertikalebene der Blechfeder (50).

## Claims

1. Pedelec bottom bracket drive unit (10) with a rigid drive housing **characterized in that** a tolerance compensation sheet-metal spring (50) standing substantially in a vertical plane is fixed at the drive housing at a fixing point (301-305) at the housing side, wherein the tolerance-compensating sheet-metal spring (50) has a mounting point (401-403) for fastening to a pedelec-frame-side drive mount (70), the mounting point (401-403) of the tolerance-compensating sheet-metal spring (50) being arranged offset with respect to the next housing-side fixing point (301-305) with respect to its transverse axes (Q3, Q4).

2. Pedelec bottom bracket drive unit (10) according to claim 1, wherein the offset (V) between the transverse axis (Q3) of the housing-side sheet metal spring fixing point (301) and the transverse axis (Q4) of the next adjacent mounting point (401) is at least 10.0 mm, particularly preferably at least 15.0 mm.

3. Pedelec bottom bracket drive unit (10) according to any one of the preceding claims, wherein the sum of all fixing points (301-303) and mounting points (401-402) of the tolerance compensation sheet-metal spring (50) is at least three.

4. Pedelec bottom bracket drive unit (10) according to any one of the preceding claims, wherein the tolerance compensation sheet-metal spring (50) has an extension crimp (85) between a fixing point (301-305) and the adjacent mounting point (401-403).

5. Pedelec bottom bracket drive unit (10) according to any one of the preceding claims, wherein the drive housing (12) has a stop flange (81, 82) which can be fixed directly in the transverse direction to a receiving stop flange (72) and the flange plane of which is arranged in a vertical longitudinal plane which is offset by at least 10 mm in the transverse direction with respect to the tolerance compensation sheet-metal spring (50).

6. Pedelec bottom bracket drive unit (10) according to any one of the preceding claims, wherein at least two separate tolerance compensation sheet-metal springs (50, 50') are provided.

7. Pedelec bottom bracket drive unit (10) according to any one of the preceding claims, wherein an output sprocket (17) is provided, wherein the longitudinal plane of the drive housing stop flange (81,82) is closer to the output sprocket (17) than the longitudinal vertical plane of the sheet-metal spring (50).

## Revendications

1. Unité d'entrainement de pédalier pour pedelec (10) comportant un boitier d'entrainement rigide (12),
**caractérisée en ce qu'**un ressort en tôle de compensation de tolérance (50), qui est fixé essentiellement dans un plan vertical à un point de fixation (301-305), côté boitier, le ressort en tôle de compensation de tolérance (50) présentant un point de montage (401-403) pour la fixation sur un logement de l'entrainement (70), côté châssis de pedelec, le point de montage (401-403) du ressort en tôle de compensation de tolérance (50) étant décalée vers le prochain point de fixation (301-305), côté boitier, par rapport à ses axes transversaux (Q3, Q4).

2. Unité d'entrainement de pédalier pour pedelec (10) selon la revendication 1, dans laquelle le décalage (V) entre l'axe transversal (Q3) du point de fixation de ressort en tôle (301), côté boitier, et l'axe transversal (Q4) de l'ensemble adjacent suivant le point (401) est d'au moins 10,0 mm, de manière particulièrement préférée d'au moins 15,0 mm.

3. Unité d'entrainement de pédalier pour pedelec (10) selon l'une quelconque des revendications précédentes, dans laquelle la somme de tous les points de fixation (301-303) et les points de montage (401-402) d'un ressort en tôle de compensation de tolérance (50) est au moins trois en total.

4. Unité d'entrainement de pédalier pour pedelec (10) selon l'une quelconque des revendications précédentes, dans laquelle le ressort en tôle de compensation de tolérance (50) présente une nervure d'étirement (85) entre un point de fixation (301-305) et le point de montage adjacent (401-403).

5. Unité d'entrainement de pédalier pour pedelec (10) selon l'une quelconque des revendications précédentes, dans laquelle le boitier d'entrainement (12) comporte une bride de butée (81, 82) pouvant être fixée directement à une bride de butée de logement (72) dans le sens transversal et dont le plan de bride est disposé dans un plan longitudinal vertical décalé d'au moins 10 mm dans la direction transversale du ressort en tôle de compensation de tolérance (50).

6. Unité d'entrainement de pédalier pour pedelec (10) selon l'une quelconque des revendications précédentes, dans laquelle au moins deux ressorts en tôle de compensation de tolérance (50, 50') séparés sont prévus.

7. Unité d'entrainement de pédalier pour pedelec (10) selon l'une quelconque des revendications précédentes, dans laquelle un plateau de sortie (17) est prévu, le plan longitudinal de la bride de butée du boitier d'entrainement (81, 82) étant plus proche du plateau de sortie (17) que le plan vertical longitudinal du ressort en tôle (50).
